# EUROPÄISCHE PATENTANMELDUNG

(11) **EP 0 641 619 A1**
(43) Veröffentlichungstag der Anmeldung: **08.03.1995**
(21) Anmeldenummer: 94110355.8
(22) Anmeldetag: 04.07.1994
(51) Int. Cl.: B23D 31/00

(54) **Werkzeugmaschine zum Lochen und Ausklinken von metallischen Werkstücken**

(30) Priorität: 04.09.1993 DE 4329987
(71) Anmelder: PEDDINGHAUS, Rolf, D-58256 Ennepeteal (DE)
(72) Erfinder: Klosterhalfen, Hartwig, Dipl.-Ing., D-52428 Jülich (DE)
(74) Vertreter: Andrejewski, Walter, Dr.

(57) **Zusammenfassung**

Werkzeugmaschine zum Lochen und zum Ausklinken von metallischen Werkstücken, insbesondere von Flachstahl- und Profilstäben, - mit Maschinengestell, Schlitten, Tisch sowie Arbeitszylinder/Kolben-Anordnung, die auf den Schlitten einwirkt und mit ihrer Achse die vertikale Arbeitsachse dieses Werkzeugaggregates definiert. Die Werkzeughalteraufnahme für den Lochwerkzeughalter befindet sich an der Unterseite eines von dem Schlitten vorkragenden Schlittenbauteils und ist mit einer Schnellwechseleinrichtung ausgerüstet. Das Lochwerkzeug arbeitet in der vertikalen Arbeitsachse des Werkzeugaggregates. Die Werkzeughalteraufnahme für den Ausklinkwerkzeughalter befindet sich um 90° versetzt zur Werkzeughalteraufnahme für den Lochwerkzeughalter unterhalb dieser Werkzeughalteraufnahme und ist ebenfalls mit einer Schnellwechseleinrichtung ausgerüstet. Das Ausklinkwerkzeug arbeitete im Anschluß an die Vertikale sowie im Bereich der vertikalen Arbeitsachse. Dem Lochwerkzeug sowie dem Ausklinkwerkzeug ist ein gemeinsames Werkzeugmaul zugeordnet. Bei der Durchführung der Lochungsarbeiten sind das Ausklinkwerkzeug mit seinem Ausklinkwerkzeughalter sowie bei der Durchführung von Ausklinkarbeiten das Lochwerkzeug mit seinem Lochwerkzeughalter mit Hilfe der Schnellwechseleinrichtungen auswechselbar.

## Beschreibung

Die Erfindung betrifft eine Werkzeugmaschine zum Lochen und Ausklinken von metallischen Werkstücken, insbesondere von Flachstahl- und Profilstäben, mit Maschinengestell, in dem Maschinengestell geführtem Schlitten mit Werkzeughalteraufnahmen, von denen eine dem Lochwerkzeug und die andere dem Ausklinkwerkzeug zugeordnet ist, Tisch, in dem Maschinengestellunterteil angeordneten Gegenwerkzeugaufnahmen und im Maschinengestelloberteil angeordneter Arbeitszylinder/Kolben-Anordnung, die auf den Schlitten einwirkt.

Werkzeugmaschinen des vorstehend beschriebenen grundsätzlichen Aufbaus und der angegebenen Zweckbestimmung sind der Praxis in verschiedenen Ausführungsformen bekannt. Diese bekannten Maschinen sind mit jeweils einem separaten Werkzeugmaul für die Durchführung der Lochungsarbeiten einerseits und für die Durchführung der Ausklinkarbeiten andererseits versehen. Diese bekannten Maßnahmen sind in fertigungstechnischer Hinsicht aufwendig. In funktioneller Hinsicht kann nicht sichergestellt werden, daß die Beanspruchungen, die das Maschinengestell aufzunehmen hat, nur klein und weitgehend frei vor störenden Momenten sind.

Zum Stand der Technik gehört eine Werkzeugmaschine (DE-GM 16 44 386), mit der sowohl Lochungsarbeiten als auch Ausklinkarbeiten, aber auch Scherarbeiten durchgeführt werden können. Hier sind drei selbständige Maschinen für die Lochungsarbeiten, die Ausklinkarbeiten bzw. die Scherarbeiten gleichsam nebeneinander angeordnet und durch ein gemeinsames Maschinengestell vereinigt. Sie sind über einen gemeinsamen Hebelantrieb antreibbar. Das ist aufwendig.

Der Erfindung liegt das technische Problem zugrunde, eine Werkzeugmaschine des eingangs beschriebenen Aufbaus so einzurichten, daß sie nach Maßgabe der betrieblichen Erfordernisse nacheinander und unter Berücksichtigung vorgegebener Losgrößen für die Werkstücke sowohl Lochungsarbeiten als auch Ausklinkarbeiten durchführen kann, und zwar bei einfachem Aufbau.

Zur Lösung des angegebenen technischen Problems ist Gegenstand der Erfindung eine Werkzeugmaschine zum Lochen und zum Ausklinken von metallischen Werkstücken, insbesondere von Flachstahl- und Profilstäben, - mit Maschinengestell, in dem Maschinengestell geführtem Schlitten mit Werkzeughalteraufnahmen, von denen eine einem Lochwerkzeug und die andere einem Ausklinkwerkzeug zugeordnet ist, Tisch, in dem Maschinengestellunterteil angeordneten Gegenwerkzeugaufnahmen und im Maschinengestelloberteil angeordneter Arbeitszylinder/Kolben-Anordnung, die auf den Schlitten einwirkt und mit ihrer Achse die vertikale Arbeitsachse dieses Werkzeugaggregates definiert, wobei die Kombination der folgenden Merkmale verwirklicht ist:
a) die Werkzeughalteraufnahme für den Lochwerkzeughalter befindet sich an der Unterseite eines von dem Schlitten vorkragenden Schlittenbauteils und ist mit einer Schnellwechseleinrichtung ausgerüstet,
b) das Lochwerkzeug arbeitet in der vertikalen Arbeitsachse des Werkzeugaggregates, und zwar mit koaxialen Achsen,
c) die Werkzeughalteraufnahme für den Ausklinkwerkzeughalter befindet sich um 90° versetzt zur Werkzeughalteraufnahme für den Lochwerkzeughalter unterhalb dieser Werkzeughalteraufnahme und ist ebenfalls mit einer Schnellwechseleinrichtung ausgerüstet,
d) das Ausklinkwerkzeug arbeitete im Anschluß an die Vertikale sowie im Bereich der vertikalen Arbeitsachse,
wobei dem Lochwerkzeug sowie dem Ausklinkwerkzeug ein gemeinsames Werkzeugmaul zugeordnet ist, in welches entweder das Lochwerkzeug oder das Ausklinkwerkzeug einführbar sind und wobei bei der Durchführung der Lochungsarbeiten das Ausklinkwerkzeug mit seinem Ausklinkwerkzeughalter sowie bei der Durchführung von Ausklinkarbeiten das Lochwerkzeug mit seinem Lochwerkzeughalter mit Hilfe der Schnellwechseleinrichtungen auswechselbar sind. Bei der Schnellwechseleinrichtung kann es sich z.B. um eine entsprechende Schraubverbindung handeln. Integraler Bestandteil einer erfindungsgemäßen Werkzeugmaschine ist das Werkzeugaggregat, welches vorstehend beschrieben wurde. Das schließt nicht aus, daß die Maschine mit weiteren Werkzeugen versehen werden und weitere Funktionen erfüllen kann. So kann sie, auch unter Verwendung des gleichen Schlittens, zusätzlich mit einer Blechschere versehen sein oder Einrichtungen für das Schneiden von Vierkant- und Winkelstahl aufweisen.

Die Erfindung geht von der Erkenntnis aus, daß eine Werkzeugmaschine des eingangs beschriebenen Aufbaus regelmäßig nicht gleichzeitig und nicht in abwechselnder Folge einerseits Lochungsarbeiten und andererseits Ausklinkarbeiten durchzuführen hat. Die Lochungsarbeiten betreffen regelmäßig Werkstücke, die einem Los mit unterschiedlicher Losgröße angehören, das gilt aber auch für die Ausklinkarbeiten. Insoweit können die Lochungsarbeiten und die Ausklinkarbeiten zeitlich nacheinander durchgeführt werden. Dieses benutzt die Erfindung zu einer Vereinfachung in bezug auf die Bauteile, die dem Werkzeugaggregat angehören. Dabei ist die Anordnung so getroffen, daß dieses Werkzeugaggregat zusammen mit den entsprechenden Bauteilen des Schlittens bei den Lochungsarbeiten praktisch frei von störenden Momenten ist, weil das Lochwerkzeug mit seiner Achse koaxial zur vertikalen Arbeitsachse des Werkzeugaggregates arbeitet, die ihrerseits mit der Achse des Kolbens der Arbeitszylinder/Kolben-Anordnung zusammenfällt. Sind Lochungsarbeiten und im Anschluß daran Ausklinkarbeiten durchzuführen, so kann das entsprechende Auswechseln der Werkzeuge sehr schnell und ohne großen Aufwand erfolgen. Das gemeinsame Werkzeugmaul hat bei der beschriebenen Auslegung und weil das Lochwerkzeug mit seinem Lochwerkzeughalter in das Werkzeugmaul hineinragt ohne weiteres einen verhältnismäßig große Bauhöhe. Folglich können bei Ausklinkarbeiten und Austausch der Lochwerkzeuge gegen die Ausklinkwerkzeuge ohne Schwierigkeiten auch Profile, die einen verhältnismäßig hohen Querschnitt aufweisen, ausgeklinkt werden.

Schnellwechseleinrichtungen, die im Rahmen der Erfindung verwendbar sind, sind in verschiedenen Ausführungsformen bekannt. Nach bevorzugter Ausführungsform der Erfindung ist die Schnellwechseleinrichtung für die Werkzeughalteraufnahme mit dem Lochwerkzeughalter aus koaxialen Bauteilen aufgebaut und mit einer leicht lösbaren Schraubverbindung ausgerüstet. Die Schnellwechseleinrichtung für die Werkzeughalteraufnahme mit dem Ausklinkwerkzeughalter ist zweckmäßigerweise aus keilförmig wirkenden Bauteilen aufgebaut und mit einer leicht lösbaren Keilverspannung versehen.

Bei der erfindungsgemäßen Werkzeugmaschine ist der Tisch zweckmäßigerweise sowohl für die Durchführung der Lochungsarbeiten als auch für die Durchführung der Ausklinkarbeiten eingerichtet und mit entsprechenden Werkstückanschlägen und/oder Werkstückaufspannelementen auswechselbar versehen. Auch die im Maschinengestelltunterteil angeordneten Gegenwerkzeugaufnahmen sind zweckmäßigerweise mit Schnellwechseleinrichtungen für die Gegenwerkzeughalter ausgerüstet.

Im folgenden wird die Erfindung anhand einer lediglich ein Ausführungsbeispiel darstellenden Zeichnung ausführlicher erläutert. Es zeigen in schematischer Darstellung
- Fig. 1: die Ansicht einer erfindungsgemäßen Werkzeugmaschine ausschnittsweise und teilweise aufgebrochen,
- Fig. 2: eine Ansicht des Gegenstandes der Fig. 1 aus Richtung des Pfeiles A,
- Fig. 3: den Gegenstand der Fig. 1 mit eingesetztem Lochwerkzeug,
- Fig. 4: den Gegenstand nach Fig. 3 mit eingesetztem Ausklinkwerkzeug.

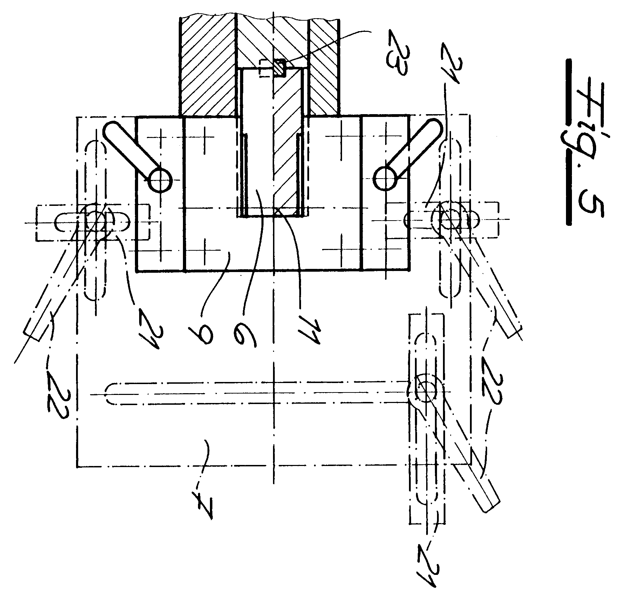

- Fig. 5: einen Schnitt A-A durch das Ausklinkwerkzeug der Fig. 4.

Die in den Figuren dargestellte Werkzeugmaschine dient zum Lochen und Ausklinken von metallischen Werkstücken, insbesondere von Flachstahl- oder Profilstäben. - Die Maschine kann mit weiteren Teilen ausgerüstet sein, die zusätzliche Werkzeuge aufweisen, so daß die Maschine auch für andere Arbeiten als Lochen und Ausklinken eingesetzt werden kann.

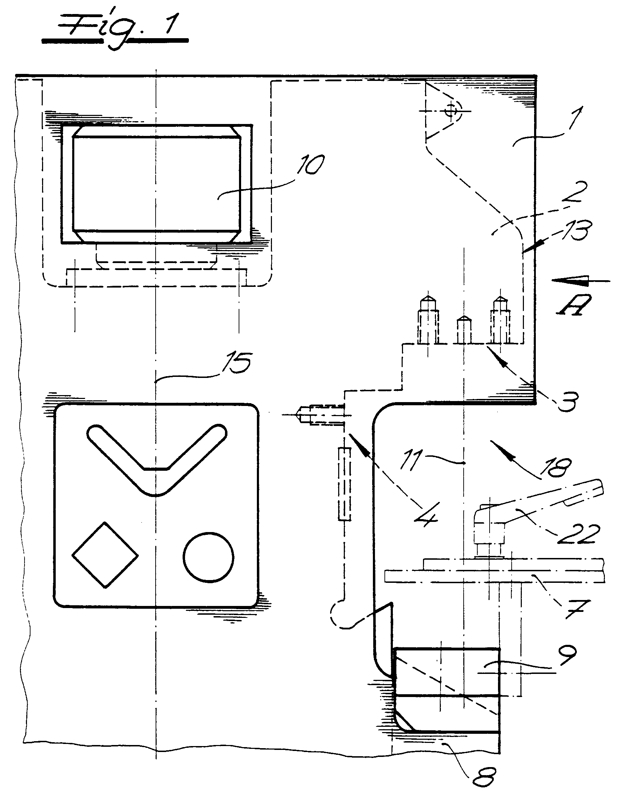

Im grundsätzlichen Aufbau besteht die Maschine aus einem Maschinengestell 1, einem in dem Maschinengestell 1 geführtem Schlitten 2 mit Werkzeughalteraufnahmen 3, 4 von denen (3) eine dem Lochwerkzeug 5 und die andere (4) dem Ausklinkwerkzeug 6 zugeordnet ist. Zum grundsätzlichen Aufbau gehören fernerhin ein Tisch 7, eine in dem Maschinengestellunterteil 8 angeordnete Gegenwerkzeugaufnahme 9 und eine im Maschinengestell oben angeordnete Arbeitszylinder/Kolben-Anordnung 10, die auf den Schlitten 2 einwirkt. Insbesondere aus der Fig. 1 entnimmt man, daß diese Arbeitszylinder/Kolben-Anordnung 10 mit ihrer vertikalen Achse die vertikale Arbeitsachse 11 des Werkzeugaggregates definiert. Diese ist bestimmt und eingerichtet, achsparallel eintretende Kräfte momentenfrei aufzunehmen.

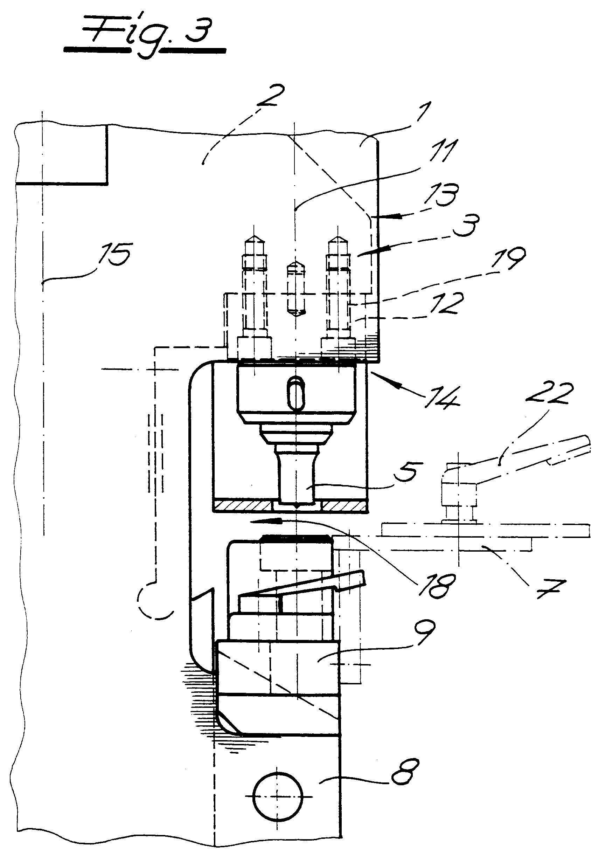

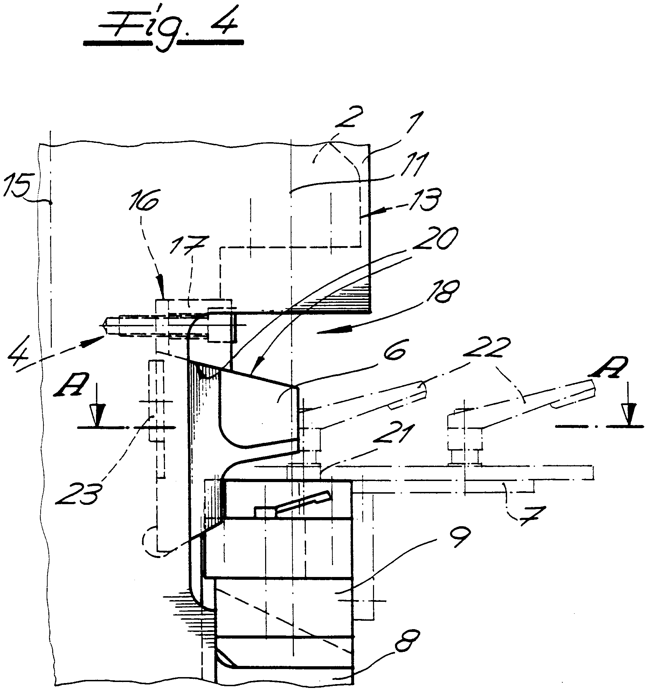

Die Werkzeughalteraufnahme 3 für den Lochwerkzeughalter 12 befindet sich an der Unterseite eines von dem Schlitten 2 vorkragenden Schlittenbauteils 13. Dazu wird insbesondere auf die Fig. 3 verwiesen. Sie ist mit einer Schnellwechseleinrichtung 14 ausgerüstet. Die Anordnung ist fernerhin so getroffen, daß das Lochwerkzeug 5 in der vertikalen Arbeitsachse 11 des Werkzeugaggregates arbeitet, wobei die Achse des Lochwerkzeuges 5 mit der Achse der Kolbenstange 15 der Antriebszylinder/Kolben-Anordnung 10 zusammenfällt. Dazu wird insbesondere auf die Fig. 3 verwiesen. Die Werkzeughalteraufnahme 4 für den Ausklinkwerkzeughalter 16 befindet sich, um 90° versetzt zur Werkzeughalteraufnahme 3 für den Lochwerkzeughalter 12, unterhalb dieser Werkzeughalteraufnahme 3. Sie ist mit einer Schnellwechseleinrichtung 17 ausgerüstet. Das Ausklinkwerkzeug 6 arbeitet im Anschluß an die Vertikale sowie im Bereich der vertikalen Arbeitsachse 11, wozu auf die Fig. 4 verwiesen wird. Man erkennt, daß die bei Ausklinkarbeiten auftretenden Momente klein bleiben.

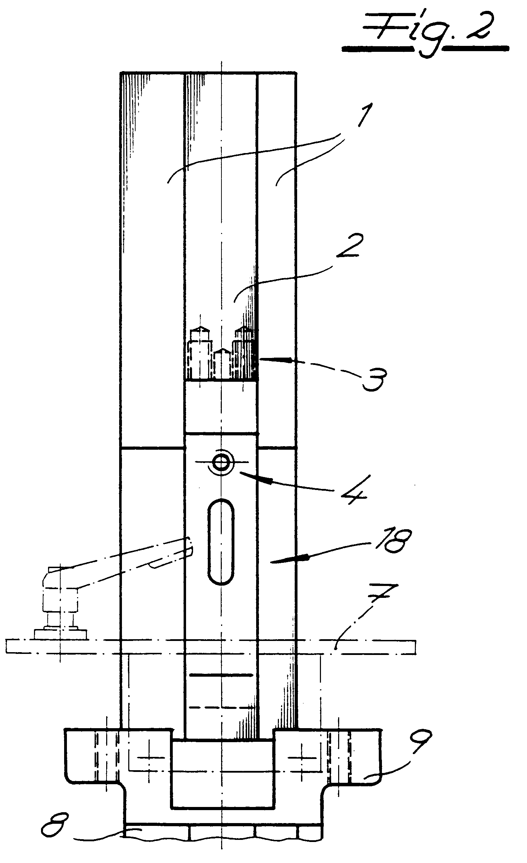

Aus den Fig. 1 und 2 entnimmt man, daß dem Lochwerkzeug 5 sowie dem Ausklinkwerkzeug 6 ein gemeinsames Werkzeugmaul 18 zugeordnet ist. In dieses Werkzeugmaul 18 ragen entweder das Lochwerkzeug 5 oder das Ausklinkwerkzeug 6 hinein. Bei der Durchführung von Lochungsarbeiten wird das Ausklinkwerkzeug 6 mit seinem Ausklinkwerkzeughalter 16 entfernt. Bei der Durchführung von Ausklinkarbeiten wird das Lochwerkzeug 5 mit seinem Lochwerkzeughalter 12 entfernt. Insoweit findet ein Auswechseln der den Arbeiten zugeordneten Werkzeuge 5, 6 statt, was mit Hilfe der Schnellwechseleinrichtungen 14, 17 leicht durchgeführt werden kann.

Aus der Fig. 3 entnimmt man, daß die Schnellwechseleinrichtung 14 für die Werkzeughalteraufnahme 3 mit dem Lochwerkzeughalter 12 aus koaxialen Bauteilen aufgebaut ist und mit einer leicht lösbaren Schraubverbindung 19 versehen ist. Aus der Fig. 4 entnimmt man, daß die Schnellwechseleinrichtung 17 für die Werkzeughalteraufnahme 4 mit dem Ausklinkwerkzeughalter 16 aus keilförmig wechselwirkenden Bauteilen 20 aufgebaut ist und mit einer leicht lösbaren Keilverspannung ausgerüstet ist, und zwar in Verbindung mit einer Ausklinkzentrierung 23.

Der Tisch 7 ist sowohl für die Durchführung der Lochungsarbeiten als auch für die Durchführung der Ausklinkarbeiten eingerichtet und mit entsprechenden Werkstückanschlägen 21 und/oder Werkstückaufspannelementen 22 auswechselbar versehen. In den Fig. 3 und 4 erkennt man im Maschinengestelltunterteil 8 die dort angeordneten Gegenwerkzeugaufnahmen 9, die ebenfalls mit Schnellwechseleinrichtungen für die Gegenwerkzeughalter ausgerüstet sind.

## Patentansprüche

1. Werkzeugmaschine zum Lochen und zum Ausklinken von metallischen Werkstücken, insbesondere von Flachstahl- und Profilstäben, - mit
Maschinengestell,
in dem Maschinengestell geführtem Schlitten mit Werkzeughalteraufnahmen, von denen eine einem Lochwerkzeug und die andere einem Ausklinkwerkzeug zugeordnet ist,
Tisch,
in dem Maschinengestellunterteil angeordneten Gegenwerkzeugaufnahmen und
im Maschinengestelloberteil angeordneter Arbeitszylinder/Kolben-Anordnung, die auf den Schlitten einwirkt und mit ihrer Achse die vertikale Arbeitsachse dieses Werkzeugaggregates definiert,
wobei die Kombination der folgenden Merkmale verwirklicht ist:
a) die Werkzeughalteraufnahme für den Lochwerkzeughalter befindet sich an der Unterseite eines von dem Schlitten vorkragenden Schlittenbauteils und ist mit einer Schnellwechseleinrichtung ausgerüstet,
b) das Lochwerkzeug arbeitet in der vertikalen Arbeitsachse des Werkzeugaggregates, und zwar mit koaxialen Achsen,
c) die Werkzeughalteraufnahme für den Ausklinkwerkzeughalter befindet sich um 90° versetzt zur Werkzeughalteraufnahme für den Lochwerkzeughalter unterhalb dieser Werkzeughalteraufnahme und ist ebenfalls mit einer Schnellwechseleinrichtung ausgerüstet,
d) das Ausklinkwerkzeug arbeitete im Anschluß an die Vertikale sowie im Bereich der vertikalen Arbeitsachse,
wobei dem Lochwerkzeug sowie dem Ausklinkwerkzeug ein gemeinsames Werkzeugmaul zugeordnet ist, in welches entweder das Lochwerkzeug oder das Ausklinkwerkzeug einführbar sind und wobei bei der Durchführung der Lochungsarbeiten das Ausklinkwerkzeug mit seinem Ausklinkwerkzeughalter sowie bei der Durchführung von Ausklinkarbeiten das Lochwerkzeug mit seinem Lochwerkzeughalter mit Hilfe der Schnellwechseleinrichtungen auswechselbar sind.

2. Werkzeugmaschine nach Anspruch 1, wobei die Schnellwechseleinrichtung für die Werkzeughalteraufnahme mit dem Lochwerkzeughalter aus koaxialen Bauteilen aufgebaut ist und mit einer leicht lösbaren Schraubverbindung ausgerüstet ist.

3. Werkzeugmaschine nach einem der Ansprüche 1 oder 2, wobei die Schnellwechseleinrichtung für die Werkzeughalteraufnahme mit dem Ausklinkwerkzeughalter aus keilförmig wechselwirkenden Bauteilen aufgebaut und mit einer leicht lösbaren Keilverspannung ausgerüstet ist.

4. Werkzeugmaschine nach einem der Ansprüche 1 bis 3, wobei der Tisch sowohl für die Durchführung der Lochungsarbeiten als auch für die Durchführung der Ausklinkarbeiten eingerichtet und mit entsprechenden Werkstückanschlägen und/oder Werkstückaufspannelementen auswechselbar versehen ist.

5. Werkzeugmaschine nach einem der Ansprüche 1 bis 4, wobei auch die im Maschinenunterteil angeordneten Gegenwerkzeugaufnahmen mit Schnellwechseleinrichtungen für die Gegenwerkzeughalter ausgerüstet sind.
